# EUROPEAN PATENT APPLICATION

(11) **EP 4 539 310 A1**
(43) Date of publication of application: **16.04.2025**
(21) Application number: 23819810.5
(22) Date of filing: 05.06.2023
(51) Int. Cl.: H02K 15/02, H02K 15/12

(54) **MOTOR CORE MANUFACTURING DEVICE, AND MOTOR CORE MANUFACTURING METHOD**

(30) Priority: 07.06.2022 JP 2022092469
(71) Applicant: NHK Spring Co., Ltd., Kanagawa 236-0004 (JP)
(72) Inventor: SATO, Kei, Yokohama-shi, Kanagawa 236-0004 (JP); OHMORI, Makoto, Yokohama-shi, Kanagawa 236-0004 (JP); FURUYA, Takumi, Yokohama-shi, Kanagawa 236-0004 (JP); KINOSHITA, Jun, Yokohama-shi, Kanagawa 236-0004 (JP); KANAZAWA KAWASAKI, Asuka, Yokohama-shi, Kanagawa 236-0004 (JP)
(74) Representative: DREISS Patentanwälte PartG mbB
(86) International application number: PCT/JP2023/020886
(87) International publication number: WO 2023/238830

(57) **Abstract**

A motor core manufacturing device of the present disclosure includes a mold that holds a motor core including a resin fill section, a chamber that is formed to the mold and that includes a one-end portion thereof communicating with a resin composition fill path in communication with the resin fill section, a plunger that conveys a resin composition with thermoset properties that has been conveyed to the chamber toward the resin composition fill path, a heating apparatus that is arranged inside the mold, or that is arranged inside the mold and at a periphery of the chamber, and an extrusion machine that conveys the resin composition to the chamber while kneading so as to introduce the resin composition into the chamber. The extrusion machine includes an extrusion conveyance path in an interior for conveying the resin composition, a screw that is arranged inside the extrusion conveyance path, and that conveys the resin composition while kneading, and a first thermoregulation mechanism that is arranged at least in part of the interior of the screw.

## Description

### Technical Field

The present disclosure relates to a motor core manufacturing device, and to a motor core manufacturing method.

### Background Art

In a rotary electrical machine, there are those in which permanent magnets are attached to a motor core, for example a rotor core. In such cases in which permanent magnets are attached to a motor core, a known method is to insert the permanent magnets inside slots provided in the motor core, and to then fill a resin composition into a periphery thereof and cure the resin composition (see, for example, Japanese Patent Application Laid-Open (JP-A) No. 2013-009453).

JP-A No. 2013-009453 describes, when filling inside the slots of the rotor core with a resin composition having thermoset properties, introducing a resin tablet having a specific size that considers a required fill amount into a pot, and heating the resin tablet inside the pot to soften/melt before filling.

### SUMMARY OF INVENTION

### Technical Problem

In the device described in JP-A No. 2013-009453, normally more resin is prepared than a standard fill amount in consideration of dimensional tolerances and the like of components, such that resin filled in the slot, for example a resin with thermoset properties, is not insufficient. However, in such cases there is a lot of wasted resin arising from dimensional tolerances when a resin fill section is small, since the thermoset resin is not able to be reused after curing. Moreover, motor cores adopt many shapes, and accordingly the slot shapes for inserting magnets therein also can have various shapes, such that there is rarely a case in which the slot shape is the same shape for different models of car. This means that if an optimum size of resin tablet is prepared for each of the motor cores, then this leads to high management costs due to the need to secure storage space and the like therefor. There is also a problem that management of the multiple resin tablets and the like also becomes troublesome.

Moreover, along with an acceleration in the development of rotary electrical machines installed to electric vehicles for driving/generation, there is a need for larger sized resin tablets due to a trend that the amount of resin used also increases due to the proliferation in sizes and slot shapes of rotary electrical machines themselves. When the amount of resin for filling is larger there is a tendency for temperature control of the resin to become more difficult than when the amount of resin is small, with this liable to lead to non-uniform temperature of localized overheating or insufficient heating. When a resin composition with thermoset properties is employed then such non-uniform temperatures might cause variation in the timing of curing, resulting in the possibility of this causing fill defects of the resin composition.

In consideration of the above circumstances, an object of the present disclosure is to provide a motor core manufacturing device and a motor core manufacturing method that enable resin composition fill defects to be suppressed while suppressing wastage in resin composition.

### Solution to Problem

In order to achieve the above object, a motor core manufacturing device according to a first aspect of the present disclosure includes a mold that holds a motor core including a resin fill section, a chamber that is formed to the mold and that includes a one-end portion thereof communicating with a resin composition fill path in communication with the resin fill section, a plunger that conveys a resin composition with thermoset properties that has been conveyed to the chamber toward the resin composition fill path, a heating apparatus that is arranged inside the mold, or that is arranged inside the mold and at a periphery of the chamber, and an extrusion machine that conveys the resin composition to the chamber while kneading so as to introduce the resin composition into the chamber. The extrusion machine includes an extrusion conveyance path in an interior for conveying the resin composition, a screw that is arranged inside the extrusion conveyance path, and that conveys the resin composition while kneading, and a first thermoregulation mechanism that is arranged at least in part of the interior of the screw.

In such a motor core manufacturing device, wastage of resin composition can be suppressed due to not needing to use precast resin composition in tablet-form as the resin composition for introducing into the chamber and being able to easily change a feed amount of the resin composition to the chamber. Moreover, due to being able to cool or heat the resin composition conveyed by the screw using the first thermoregulation mechanism, a rise in temperature caused by sheer-induced heat arising during conveying of the resin composition can be suppressed from occurring by, for example, utilizing the first thermoregulation mechanism to cool the resin composition. This thereby enables unintentional progression of a curing reaction to be suppressed from occurring during conveying of the resin composition, enabling fill defects of the resin composition to be avoided. Moreover, by utilizing the first thermoregulation mechanism to heat the resin composition, a rapid rise in temperature can be assisted when raising the temperature of the resin composition inside the extrusion machine. Moreover, often there are cases in which sheer-induced heat arising during conveying of the resin composition is generated locally, which might be the cause of non-uniform temperatures, however there is an expectation of a suppression effect on such non-uniform temperatures by heating the resin composition using the first thermoregulation mechanism.

A motor core manufacturing device according to a second aspect of the present disclosure is the motor core manufacturing device according to the first aspect of the present disclosure, wherein the extrusion machine further includes a second thermoregulation mechanism that is arranged on the extrusion conveyance path so as to surround part of the screw.

In such a motor core manufacturing device, due to including the second thermoregulation mechanism arranged on the extrusion conveyance path in addition to the first thermoregulation mechanism arranged at the interior of the screw, the resin composition being conveyed inside the extrusion conveyance path can be cooled or heated from both sides of the inside and the outside. This thereby enables execution of more reliable temperature control of the resin composition during conveying.

A motor core manufacturing device according to a third aspect of the present disclosure is the motor core manufacturing device according to the first aspect or the second aspect of the present disclosure, wherein the first thermoregulation mechanism includes an inflow path equipped with a heat carrier feed port at a one-end and extending from a base end side of the screw along a center axis of the screw, and an outflow path having a one-end in communication with an other-end of the inflow path and extending toward a base end side of the screw.

In the motor core manufacturing device as described above, due to forming the through-path capable of passing the heat carrier in the interior of the screw, the screw and the resin composition at the periphery of the screw is able to be cooled or heated by feeding the heat carrier through the interior of the screw.

A motor core manufacturing device according to a fourth aspect of the present disclosure is the motor core manufacturing device according to the third aspect of the present disclosure, wherein a heat carrier employed in the first thermoregulation mechanism is a gas.

In such a motor core manufacturing device, by employing a gas as the heat carrier used in the first thermoregulation mechanism, handling of the heat carrier is facilitated compared to cases in which a liquid-form heat carrier is employed.

A motor core manufacturing device according to a fifth aspect of the present disclosure is the motor core manufacturing device according to any one of the first aspect to the fourth aspect of the present disclosure, wherein the screw includes a tube-shaped first screw main body that has a fin for conveying the resin composition formed at an outer periphery and that has a closed off leading end, and a first flow path forming member that is configured by a tube-shaped body provided with a through hole at a center portion thereof extending along a length direction, and that is also formed with plural indented grooves disposed at an outer periphery thereof extending along the length direction, and wherein the first flow path forming member is fitted inside the first screw main body such that a gap is formed between a leading end thereof and a bottom portion inside the first screw main body.

In such a motor core manufacturing device, the inflow path and the outflow path can be formed in the screw interior by assembling two members, with this facilitating machining and the like of components employed in the screw.

A motor core manufacturing device according to a sixth aspect of the present disclosure is the motor core manufacturing device according to any one of the first aspect to the fourth aspect of the present disclosure, wherein the screw includes a second screw main body that has a fin for conveying the resin composition formed at an outer periphery and that has plural of through holes formed in an interior and extending along a length direction, and a second flow path forming member that is joined to a leading end portion of the second screw main body and that communicates end portions of the plural of through holes with each other.

In such a motor core manufacturing device the inflow path and the outflow path can be formed in the screw interior by assembling two members, with this facilitating machining and the like of components employed in the screw.

A motor core manufacturing device according to a seventh aspect of the present disclosure is the motor core manufacturing device according to a sixth aspect of the present disclosure, wherein the second screw main body is formed by joining together plural individual divided bodies each formed with the fin at the outer periphery and formed with plural through holes in an interior extending along a length direction by joining together so as to communicate the plural through holes with each other.

In such a motor core manufacturing device, the length of the screw main body can be varied simply due to the screw main body being formed by joining together plural divided bodies.

A motor core manufacturing method according to an eighth aspect of the present disclosure includes a process in which a motor core is held inside a mold formed with a resin composition fill path so as to communicate the resin composition fill path with a resin fill section of the motor core, a process in which a resin composition is conveyed toward a chamber that communicates with the resin composition fill path while performing temperature regulation using an extrusion machine capable of conveying the resin composition, wherein the extrusion machine in the process includes an extrusion conveyance path having the resin composition conveyed inside, a screw that is arranged inside the extrusion conveyance path and that conveys the resin composition while kneading, and a first thermoregulation mechanism having at least a part arranged in the interior of the screw, a process in which a plunger that is moveable inside the chamber is operated and the resin composition that has been softened inside the chamber is filled inside the resin fill section, and a process in which the softened resin composition filled inside the resin fill section is cured.

In such a motor core manufacturing method, there is no need to use resin composition precast into tablet-form as the resin composition for introducing into the chamber, and the feed amount of the resin composition to the chamber can be easily changed, thereby enabling wastage of resin composition to be suppressed. Moreover, due to being able to convey the resin composition to the chamber while performing temperature regulation utilizing, for example, the first thermoregulation mechanism, a rise in temperature caused by sheer-induced heat arising during conveying the resin composition can be suppressed by, for example, using the first thermoregulation mechanism to cool the resin composition. This thereby enables unintentional progression of a curing reaction to be suppressed from occurring during conveying of the resin composition, enabling fill defects of the resin composition to be avoided. Moreover, in cases in which the temperature of the resin composition inside the extrusion machine is to be raised, a rapid rise in temperature can be assisted by using the first thermoregulation mechanism to heat the resin composition. Moreover, although there are often cases in which sheer-induced heat arising during conveying of the resin composition is generated locally, and this might cause non-uniform temperature, a suppression effect on such non-uniform temperatures can be expected by heating the resin composition with the first thermoregulation mechanism.

The motor core manufacturing device and motor core manufacturing method of the present disclosure are able to suppress fill defects of resin composition while also suppressing wastage of resin composition.

### BRIEF DESCRIPTION OF DRAWINGS

Fig. 1 is a schematic explanatory diagram illustrating an example of a motor core manufacturing device according to a first embodiment of the present disclosure.
Fig. 2A is an explanatory diagram illustrating part of a first thermoregulation mechanism of the motor core manufacturing device illustrated in Fig. 1, and is a cross-section and a one-side view illustrating one state in a screw manufacturing process.
Fig. 2B is an explanatory diagram illustrating part of the first thermoregulation mechanism of the motor core manufacturing device illustrated in Fig. 1, and is a cross-section and a one-side view illustrating one state in a screw manufacturing process.
Fig. 2C is an explanatory diagram illustrating part of the first thermoregulation mechanism of the motor core manufacturing device illustrated in Fig. 1, and is a cross-section and a one-side view illustrating one state in a screw manufacturing process.
Fig. 3A is an explanatory diagram illustrating a first modified example of the screw illustrated in Fig. 2, and is a cross-section and a one-side view illustrating a first screw main body.
Fig. 3B is an explanatory diagram illustrating a first modified example of the screw illustrated in Fig. 2, and is a cross-section and a one-side view illustrating a first flow path forming member.
Fig. 3C is an explanatory diagram illustrating a first modified example of the screw illustrated in Fig. 2, and is a cross-section and a one-side view of a screw according to the first modified example.
Fig. 4A is an explanatory diagram illustrating a second modified example of the screw illustrated in Fig. 2, and is a cross-section and a one-side view illustrating a state prior to assembly of a second screw main body and a second flow path forming member.
Fig. 4B is an explanatory diagram illustrating a second modified example of the screw illustrated in Fig. 2, and is a cross-section and a one-side view illustrating a state after assembly of a second screw main body and a second flow path forming member.
Fig. 5 is a flowchart illustrating an example of a motor core manufacturing method according to a first embodiment of the present disclosure.
Fig. 6A is an operational explanatory diagram illustrating an example of an operation state of the motor core manufacturing device illustrated in Fig. 1 when the motor core manufacturing method illustrated in Fig. 5 is being executed.
Fig. 6B is an operational explanatory diagram illustrating an example of an operation state of the motor core manufacturing device illustrated in Fig. 1 when the motor core manufacturing method illustrated in Fig. 5 is being executed.
Fig. 7A is an operational explanatory diagram illustrating an example of an operation state of the motor core manufacturing device illustrated in Fig. 1 when the motor core manufacturing method illustrated in Fig. 5 is being executed.
Fig. 7B is an operational explanatory diagram illustrating an example of an operation state of the motor core manufacturing device illustrated in Fig. 1 when the motor core manufacturing method illustrated in Fig. 5 is being executed.
Fig. 8A is an operational explanatory diagram illustrating an example of an operation state of the motor core manufacturing device illustrated in Fig. 1 when the motor core manufacturing method illustrated in Fig. 5 is being executed.
Fig. 8B is an operational explanatory diagram illustrating an example of an operation state of the motor core manufacturing device illustrated in Fig. 1 when the motor core manufacturing method illustrated in Fig. 5 is being executed.

### DESCRIPTION OF EMBODIMENTS

The present application is based on Japanese Patent Application 2022-092469 filed June 7, 2022, the contents of which are hereby incorporated in its entirety by reference into the present application, as part thereof.

The present disclosure will become more fully understood from the detailed description given hereinbelow. Further range of application of the present disclosure will become clearer from the detailed description given hereinbelow. However, the detailed description and the specific embodiment are illustrated of desired embodiments of the present disclosure and are described only for the purpose of explanation. Various changes and modifications will be apparent to those of ordinary skilled in the art on the basis of the detailed description.

The applicant has no intention to give to public any disclosed embodiment. Among the disclosed changes and modifications, those which may not literally fall within the scope of the patent claims constitute, therefore, a part of the present invention in the sense of doctrine of equivalents.

Description follows regarding embodiments for implementing the present disclosure, with reference to the drawings. Note that areas needed to explain how an object of the present disclosure is achieved are schematically illustrated below, with areas needed to explain such portions of the present disclosure mainly described, and locations omitted from explanation are known technology. Moreover, the same or similar reference numerals will be appended in the drawings to the same or equivalent members, and duplicate explanation thereof will be omitted. Furthermore, sometimes in cases in which there are plural of the same or equivalent members contained in the respective drawings, reference numerals will only be appended to some thereof in order to simplify the appearance of the drawings.

### Motor Core Manufacturing Device

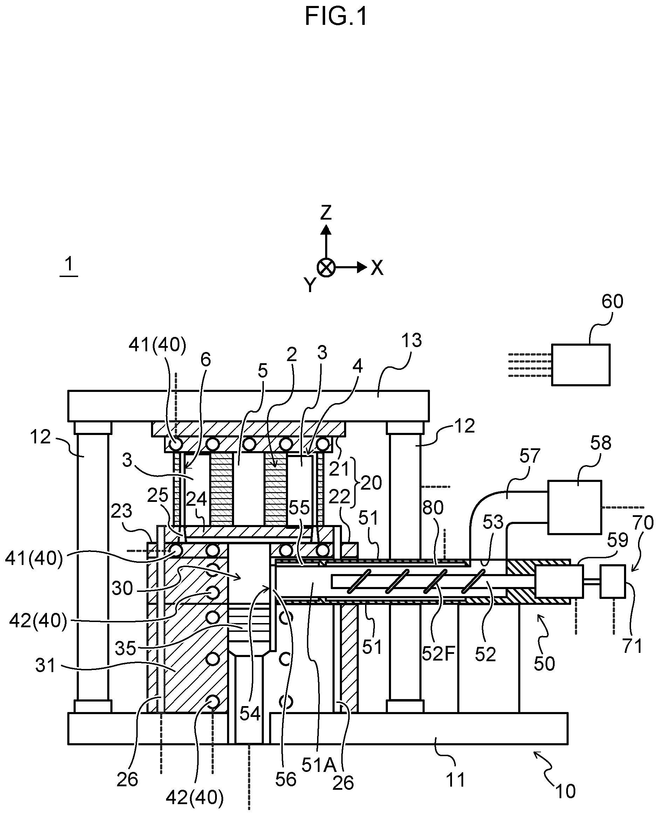

Fig. 1 is a schematic explanatory diagram illustrating an example of a motor core manufacturing device according to a first embodiment of the present disclosure. A motor core manufacturing device 1 according to the present embodiment may be a device for attaching permanent magnets 3 to a motor core, for example to an inner rotor type rotor core 2. The attachment of the permanent magnets 3 may be implemented using resin molding. Note that in the present embodiment the rotor core 2 is illustrated as an example of a motor core, and slot sections 4 (more precisely fill spaces 6) of the rotor core 2 are illustrated as an example of resin fill sections provided to a motor core, however the present disclosure is not limited thereto. Specifically, this motor core manufacturing device 1 can, for example, be utilized for resin molding portions or the like where coils of a stator core have been wound as a motor core, or for filling resin into through holes or the like provided along an axial direction of an unriveted stacked core so as to integrally fix the stacked core together. Moreover, in the following description, in order to facilitate understanding, explanation will be performed for a case in which the X direction illustrated in Fig. 1 indicates a left-right direction, the Y direction therein indicates a front-rear direction, the Z direction therein indicates a height direction (up-down direction).

A resin composition P employed in the motor core manufacturing device 1 according to the present embodiment is a resin composition with thermoset properties. More specifically, the resin composition P may include thermoset resins consisting mainly of an epoxy resin, a phenolic resin, an unsaturated polyester resin, or a cyanate resin. Moreover, in addition to a thermoset resin, a curing agent, a filler, and the like may also be added to the resin composition P.

The motor core manufacturing device 1 according to the present embodiment includes, as illustrated in Fig. 1, at least a manufacturing device main body 10, a mold 20 for holding the rotor core 2, a chamber 30 capable of housing the resin composition P, a plunger 35 for conveying the resin composition P inside the chamber 30, a heating apparatus 40 serving as an example of a heating apparatus capable of heating the mold 20 and the chamber 30, and an extrusion machine 50 for introducing the resin composition P into the chamber 30.

The manufacturing device main body 10 may include a base 11, plural (for example four) support pillars 12 upstanding from a surface of the base 11, and a top plate 13 supported by leading end portions of the support pillars 12. An upper die 21 of the mold 20, described later, may be fixed to a face on a lower side of the top plate 13, and a non-illustrated actuator may be utilized to enable the top plate 13 to be raised or lowered in the height direction together with the support pillars 12 and the upper die 21.

The mold 20 is a member for holding the rotor core 2. Specifically, the mold 20 may include the upper die 21 that contacts and supports an upper portion, more specifically an upper surface, of the rotor core 2, and a lower die 22 that contacts and supports a lower portion, more specifically a lower surface, of the rotor core 2. From out of these, the lower die 22 may include a lower die main body 23, and a stage 24 that is provided above the lower die main body 23 and on which the rotor core 2 is placed. The rotor core 2 may be placed on the stage 24, or conveyed in from above the stage 24, by a robot arm or the like (not illustrated in the drawings).

In addition, a resin composition fill path 25 may be provided in the interior of the stage 24 for feeding the resin composition P to appropriate places of the rotor core 2 placed on the stage 24. A path structure of the resin composition fill path 25 is preferably changed to match a structure of the rotor core 2 placed on the stage 24. Plural individual stages 24 are preferably prepared in advance with different structures of resin composition fill path 25, and used by changing over as appropriate to match dimensions of the rotor core 2 held in the mold 20, position of the slot sections 4, and the like. Moreover, the lower die 22 may further include a lifter 26 that raises or lowers the stage 24 in order to perform cleaning and the like of the resin composition fill path 25. Note that although the present example embodiment is an embodiment in which the resin composition fill path 25 is provided to the lower die 22 and the resin composition P is filled from below, there is no limitation thereto. For example, an embodiment may be adopted in which a resin composition fill path is provided to the upper die 21 and the resin composition P is filled from above.

Moreover, the upper die 21 may be configured so as to be movable in the height direction together with the top plate 13, described above. The upper die 21 is then lowered when the rotor core 2 has been placed on the stage 24, and the rotor core 2 can be held so as to be clamped between the upper die 21 and the lower die 22 by pressing the upper surface of the rotor core 2 with a specific pressing force. The surfaces of the upper die 21 and the stage 24 that contact the rotor core 2 are preferably adjusted in profile, material, or the like such that the resin composition P does not leak outside the rotor core 2 during filling of the resin composition **P,** described later, in other words such that these contact faces achieve a sealed state when the rotor core 2 is has been clamped. Moreover, although in the present embodiment a structure is adopted as described above in which the upper die 21 is moved up or down together with the top plate 13, another structure may be adopted therefor as long as it is a structure in which a relative position of the upper die 21 and the lower die 22 can be changed in the height direction. Specifically, for example, instead of moving the upper die 21 in the height direction, a structure may be adopted in which the lower die 22 is moved in the height direction, or both the upper die 21 and the lower die 22 are moved.

The present embodiment illustrates an example of the slot sections 4 of the rotor core 2 having a cuboidal shape without any substantial gaps in either the front-rear or left-right directions. This means that dies with substantially flat contact surfaces may be adopted for the upper die 21 and the lower die 22, however the profiles of the contact surfaces of the upper die 21 and the lower die 22 may be changed as appropriate to match the profile of the rotor core 2. For example, in cases in which the motor core manufacturing device 1 according to the present embodiment is employed for resin molding an inner rotor type stator core, dies that include a projection inserted into a space formed at the center of the stator core are preferably employed for the upper die 21 and the lower die 22.

The rotor core 2 held in the mold 20 described above may, for example, be configured by a substantially circular cylinder-shaped magnetic body configured by plural stacked thin electromagnet steel plates. A through hole 5 may be provided in an axial center portion of the rotor core 2 for inserting a shaft configuring a rotation shaft when assembled as a motor. Moreover, one or plural of the slot sections 4 that extend along an axial direction of the rotor core 2 may be provided so as to surround this through hole 5. Although the slot sections 4 can be formed in a cuboidal shape, for example, there is no particular limitation to the specific shape thereof as long as it is a shaped enabling permanent magnets 3, described later, to be inserted therein.

The slot sections 4 of the rotor core 2 may have the permanent magnets 3 inserted into the interior thereof and fixed thereto. The permanent magnets 3 may, for example, be configured as a cuboidal body slightly smaller than the slot sections 4. It does not matter whether or not the permanent magnets 3 are magnetized. At least partial gaps are formed between an outer peripheral face of the permanent magnets 3 and an inner peripheral face of the slot sections 4 when the permanent magnets 3 have been inserted into the slot sections 4. These gaps function as fill spaces 6 serving as an example of resin fill sections. Part of each of the plural fill spaces 6 is configured so as to be in communication with an end portion of the resin composition fill path 25 when the rotor core 2 has been placed on the stage 24.

The chamber 30 may be a chamber formed with a space to introduce a specific amount of the resin composition P to be filled in the fill spaces 6. The chamber 30 may be formed so as to extend in the height direction in the interior of a support platform 31 provided on the base 11. The upper end portion of the chamber 30 may be in communication with the resin composition fill path 25 of the stage 24 in the lower die 22 arranged on the support platform 31.

The plunger 35 may be a member to convey the resin composition P that has been conveyed inside the chamber 30 toward the resin composition fill path 25. The plunger 35 according to the present embodiment may be one formed to a lower surface of the chamber 30, and may be one connected to a non-illustrated actuator and movable inside the chamber 30 in the height direction.

The heating apparatus 40 may be configured by a known heater or the like, and may be any configuration that heats appropriate places of the manufacturing device 1. The heating apparatus 40 according to the present embodiment may include a mold heater 41 arranged inside the mold 20, specifically inside the upper die 21 and the lower die main body 23, and may include a chamber heater 42 arranged at a periphery of the chamber 30 inside the support platform 31 so as to be in close proximity to the outer periphery of the chamber 30. Examples of heaters that may be adopted for the mold heater 41 and the chamber heater 42 include known heaters such as, for example, an infrared heater and a sheath heater.

An extrusion machine (also called an "extruder") 50 may be any machine having one end in communication with the chamber 30, and capable of conveying the resin composition P toward the chamber 30 while kneading the resin composition P. The extrusion machine 50 includes at least a barrel 51 serving as an example of an extrusion conveyance path for conveying the resin composition P in the interior of the extrusion machine 50, and a screw 52 arranged in the interior of the barrel 51 for conveying, while kneading, the resin composition P that has been fed into the barrel 51, for example powder-form resin composition P1. Note that although in the present embodiment an example had been illustrated of the extrusion machine 50 extending in the left-right direction, there is no limitation to the extension direction of the extrusion machine 50 and, for example, the extrusion machine 50 may extend diagonally upward from the chamber 30, and may extend in the height direction so as to be alongside the chamber 30. In a case in which the extrusion machine 50 and the chamber 30 are arranged alongside each other, a space for conveying the resin composition P may be secured between the extrusion machine 50 and the chamber 30. Moreover, although an example had been illustrated in the present disclosure of a case in which the powder-form resin composition P1 is fed as the resin composition P fed into the barrel 51, there is no limitation to being powdered, and another form may be adopted therefor such as, for example, one in which at least part thereof is in a paste-form or a pellet-form. Furthermore, the powder-form resin composition P1 of the present disclosure indicates a resin composition P1 formed by comparatively small particles of a granulated-form or granular-form (with these particles including particles such as small fragments obtained by pulverizing/crushing a comparatively large resin block).

The barrel 51 extends in one direction, for example in the left-right direction, and may be a conveyance path for conveying the resin composition P, while kneading the resin composition P. A feed port 53 into which the powder-form resin composition P1 is fed may be formed at a one-end portion of the barrel 51, and a discharge port 54 that is joined to the chamber 30 may be formed at an other-end portion thereof. A resin composition feed source 58 may be joined to the feed port 53 through a resin composition feed path 57. Moreover, a shutter 56 that is, for example, either a sliding or a rotational shutter may be provided to the discharge port 54.

The screw 52 rotated by a motor 59 connected to a one-end thereof may be configured from an elongated member having a helical-shaped fin 52F formed to an outer peripheral face thereof. This screw 52 may be arranged inside the barrel 51 along the extension direction thereof so as to convey the powder-form resin composition P1 fed in from the feed port 53 toward the discharge port 54, while kneading the powder-form resin composition P1. The resin composition P can be pressurized while being conveyed by continuously feeding the powder-form resin composition P1 with respect to the screw 52. The powder-form resin composition P1 being conveyed inside the barrel 51 may accordingly be gradually transformed into a paste-form resin composition P2 by being kneaded and pressurized by the screw 52 by this conveying process. Note that the paste-form referred to here indicates that the resin composition P that was in a powdered form has been integrated together to form a mass, and is now in a paste- or clay-form state.

The motor 59 connected to the screw 52 is able to adjust a conveyance amount of the resin composition P using the rotation speed thereof. This means that the amount of the paste-form resin composition P2 introduced from the extrusion machine 50 into the chamber 30 can be adjusted with good accuracy by controlling the rotation speed of the motor 59. Note that the paste-form resin composition P2 referred to here may be a mixture of the paste-form resin composition P2 and the powder-form resin composition P1. Moreover, although an example had been illustrated in the present embodiment of controlling the amount of the paste-form resin composition P2 introduced into the chamber 30 using the rotation speed of the motor 59, control of this introduction amount is not limited to such a method. For example, the introduction amount of the paste-form resin composition P2 into the chamber 30 can be controlled from a volume of the paste-form resin composition P2 inside the barrel 51, or from a thrust needed to convey the paste-form resin composition P2.

The extrusion machine 50 may further include a temperature sensor for detecting a temperature of the powder-form resin composition P1 or the paste-form resin composition P2 conveyed inside the barrel 51, or for detecting a chamber temperature inside the barrel 51. The introduction amount of the paste-form resin composition P2 to the chamber 30 can be adjusted with greater accuracy by controlling the rotation speed of the motor 59 based on a detection result of this temperature sensor, and on a pre-set introduction amount of resin composition to the chamber 30. Note that although an example had been illustrated of the extrusion machine 50 according to the present embodiment for an extruder that includes a single the screw 52, a configuration with two or more of the screws 52 may be adopted.

Moreover, in order to control each of the configuration elements described above, such as the motor 59 and the like, the manufacturing device 1 according to the present embodiment may further include a control device 60. The control device 60 may, for example, be connected so as to enable communication with each configuration element by wired or wireless communication, as illustrated by the dotted lines in Fig. 1. The control device 60 may be implemented using a programmable logic controller (PLC) or a known computer.

By employing the extrusion machine 50 including mainly the configuration described above, the motor core manufacturing device 1 according to the present embodiment is able to feed a freely selected amount of the resin composition P into the chamber 30 without employing a precast tablet-form resin composition. This enables the conveyance amount of the resin composition P to the chamber 30 (namely, introduction amount into the chamber 30) to be made adjustable by controlling a rotation speed of the motor 59, enabling the introduction amount into the chamber 30 to be made changeable, and enabling a reduction can be achieved in wastage of the resin composition P during the manufacturing process. Moreover, there is no longer a need to select a resin tablet to match a fill amount of the resin composition (resin composition fill amount) to the motor core.

On the other hand, by using the screw 52 to both knead and convey the resin composition P as in the extrusion machine 50 described above, the resin composition P receives sheer deformation from the screw 52 while being conveyed. This means that the temperature of the resin composition P is at least locally raised by sheer-induced heat generated during this deformation. In cases in which a resin with thermoset properties is employed as the resin composition P, as in the present embodiment, there is a possibility of unintentional progression of a curing reaction due to the sheer-induced heat, and a possibility that part thereof cures inside the barrel 51.

Such unintentional progression of the curing reaction of the resin composition P inside the barrel 51 might be a cause of variation in feed amount of the resin composition P into the chamber 30, an increased frequency of cleaning inside the extrusion machine 50, or a cause of various problems generated when rotational operation of the screw 52 is stopped, such as catching or the like of resin composition for which the curing reaction has progressed. In addition thereto, the above described unintentional progression of the curing reaction is sometimes a cause of variation in (melt) viscosity of the resin composition P fed into the chamber 30, and suppose that the (melt) viscosity has become too high, then this would be detrimental to the fluidity in the interior of the resin composition fill path 25, the slot sections 4, and the like, such that the resin composition P may no longer be able to be filled in the fill spaces 6 inside the rotor core 2. In consideration of the above circumstances, in the motor core manufacturing device 1 according to the present embodiment, a first thermoregulation mechanism 70 is employed in order to suppress such unintentional rise in temperature of the resin composition P from occurring. Description follows regarding the first thermoregulation mechanism 70.

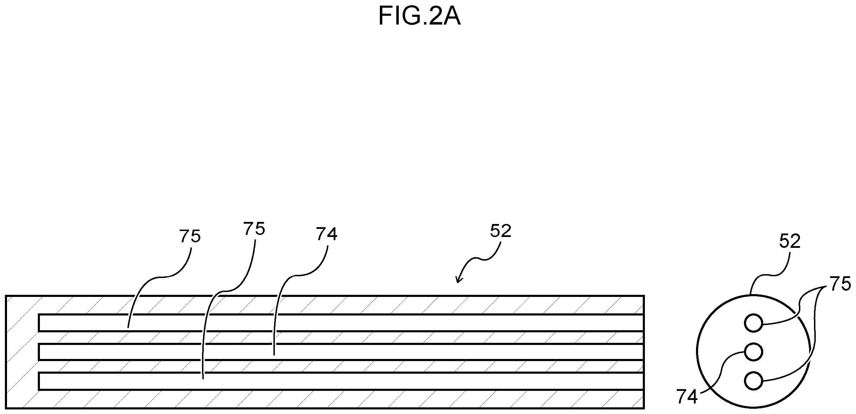

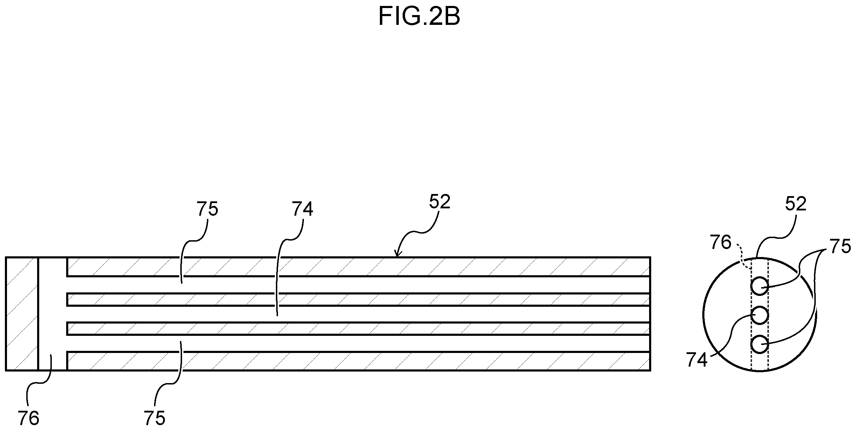

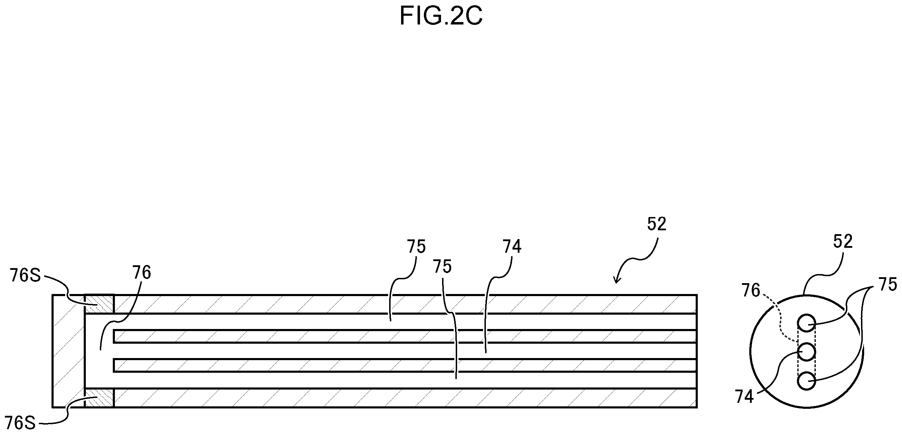

Figs. 2 are diagrams illustrating part of a first thermoregulation mechanism of the motor core manufacturing device illustrated in Fig. 1, with Fig. 2A and Fig. 2B each being a cross-section and a one-side view illustrating one state of a screw manufacturing process, and Fig. 2C being a cross-section and a one-side view illustrating a manufactured screw. Note that a fin 52F formed at the periphery of the screw 52 is omitted from illustration in Figs. 2. Moreover, each of the cross-sections of Figs. 2 is sectioned along a plane extending in a length direction of the screw 52 and passing through a center axis thereof, and the one-side views therein illustrate a face of the screw 52 on a base end side joined to the motor 59.

The first thermoregulation mechanism 70 of the motor core manufacturing device 1 according to the present embodiment has, as illustrated in Fig. 2C, at least part of the first thermoregulation mechanism 70 arranged in the interior of the screw 52, and is thereby configured to suppress a rise in temperature of the resin composition P being kneaded and conveyed by the screw 52. A heat carrier employed in the first thermoregulation mechanism 70 may be a gas. Specifically, the first thermoregulation mechanism 70 of the present embodiment may be an air-cooled cooling mechanism employing air as the heat carrier, and may include an inflow path 74 and an outflow path 75 provided inside the screw 52. As described above, due to adopting a gas as the heat carrier of the first thermoregulation mechanism 70, handling thereof is made easier than cases in which a cooling mechanism employed is one that uses a liquid such as water or the like as the heat carrier.

Note that although in the present embodiment an example is illustrated in which cooling of the resin composition P is an objective of the first thermoregulation mechanism 70, by regulating the temperature of the heat carrier, the first thermoregulation mechanism 70 may be employed for maintaining the temperature of, or for heating, the resin composition P. Namely, the first thermoregulation mechanism 70 may be said to be a mechanism that performs temperature regulation of the resin composition P conveyed inside the barrel 51.

When the first thermoregulation mechanism 70 is utilized to heat the resin composition P, a fast temperature rise can be assisted in cases in which, for example, there is a desire to raise the temperature of the resin composition P inside the extrusion machine 50. Moreover, there are often cases in which sheer-induced heat that arises during conveying the resin composition P inside the extrusion machine 50 is locally generated inside the barrel 51 and so this might cause non-uniformity of temperature, however a suppression effect on such non-uniformity of temperature can be expected by heating the resin composition P inside the barrel 51 using the first thermoregulation mechanism 70.

The first thermoregulation mechanism 70 of the present embodiment may more specifically, as illustrated in Fig. 1 and Fig. 2C, include a blower 71 serving as an example of a heat carrier feed source, with the inflow path 74 and the outflow paths 75 through the inside of which air is fed from the blower 71 provided in the interior of the screw 52.

The blower 71 is an example of a heat carrier feed source, and may be connected to a heat carrier feed port provided at a base end side of the inflow path 74 formed inside the screw 52, and be capable of feeding air, as the heat carrier, to inside the inflow path 74. Note that although in the present embodiment an air-cooled cooling mechanism is employed as the first thermoregulation mechanism 70, in an example in which air used as the heat carrier, the heat carrier is not limited thereto. Specifically, for example, water or another fluid may be employed as the heat carrier. **In** such cases another heat carrier feed means may be employed instead of the blower 71.

The screw 52 may be one in which the inflow path 74 is formed at the center thereof, and plural outflow paths 75 are formed at positions in close proximity to an outer peripheral face of the screw 52. The inflow path 74 may be configured by a through-path extending along a center axis of the screw 52 with a one-end positioned at the base end side of the screw 52 formed as a heat carrier feed port as an opening in an end portion of the screw 52, and an other-end thereof positioned at the leading end side of the screw 52 in communication with the outflow paths 75. Moreover, the outflow paths 75 may be formed by plural (two in Fig. 2) through-paths extending substantially parallel to the inflow path 74 and disposed between the inflow path 74 and the outer peripheral face of the screw 52. The outflow paths 75 may be through-paths each having a one-end positioned at the leading end side of the screw 52 in communication with the other-end of the inflow path 74, and having an other-end positioned at the base end side of the screw 52 in communication with the exterior of the barrel 51.

A connection structure to connect the inflow path 74 formed to the rotatable screw 52 and the blower 71 together is simplified by forming the inflow path 74 along the center axis of the screw 52 as described above, and is accordingly preferable. **In** relation thereto, due to employing air as the heat carrier in the first thermoregulation mechanism 70 of the present embodiment, there is no need to collect air that has exited from the outflow paths 75. This means that the other-ends of the outflow paths 75 may be in communication with the exterior of the barrel 51. Note that the present embodiment illustrates an example in which there are two of the outflow paths 75 provided so as to be disposed on either side of the inflow path 74 in the height direction, however the placement and number of the outflow paths 75 may be changed as appropriate. For example, four of the outflow paths 75 may be provided so as to be disposed on either side of the inflow path 74 in both the height direction and left-right direction.

The other-end of the inflow path 74 and the one-ends of the outflow paths 75 are in communication through a communication path 76. This communication path 76 may, as illustrated in Fig. 2C, be formed by a through-path extending in a direction intersecting with an extension direction of the screw 52. The first thermoregulation mechanism 70 is able to cool the screw 52 and the resin composition P being conveyed at the periphery of the screw 52 mainly by passing air, as a heat carrier, through the interior of this communication path 76 and the outflow paths 75 described above. The communication path 76 and the outflow paths 75 are accordingly preferably arranged at positions in close proximity to the outer peripheral face of the screw 52.

A simple explanation follows regarding an example of a method of manufacturing the screw 52 including the configuration described above. First, as illustrated in Fig. 2A, three bottomed holes are formed from a base end side of the elongated screw 52 along a length direction of the screw 52. These bottomed holes respectively form the inflow path 74 and the outflow paths 75. Next, as illustrated in Fig. 2B, a through hole is formed from an outer peripheral face of the screw 52 so as to cut across bottom portions of the three bottomed holes. The through hole forms the communication path 76. Finally, two opening portions of the through hole are blocked off using sealing members 76S so as to enable provision of the screw 52 including the inflow path 74 and the outflow paths 75 that have end portions communicated with each other through the communication path 76.

In the motor core manufacturing device 1 according to the present embodiment, the first thermoregulation mechanism 70 including the configuration described above is operated when the screw 52 is operated and the resin composition P is being conveyed into the chamber 30. This means that the screw 52, and the resin composition P that is being conveyed while kneaded at the periphery of the screw 52, can be cooled. This accordingly enables an unintentional rise in temperature due to sheer-induced heat generated during conveying by the screw 52 to be suppressed from occurring, enabling effective suppression of fill defects caused by progression of the curing reaction of the resin composition P prior to filling, and more precisely, enabling effective suppression of conveyance defects of the resin composition P inside the barrel 51, and effective suppression of a rise in the frequency of cleaning tasks inside the barrel 51.

In order to more reliably suppress a rise in temperature caused by sheer-induced heat arising in the resin composition P, the motor core manufacturing device 1 according to the present embodiment may, in addition to the first thermoregulation mechanism 70 described above, also be provided with a second thermoregulation mechanism 80 on the barrel 51 side. The second thermoregulation mechanism 80 is, as illustrated in Fig. 1, preferably provided to at least part of the barrel 51 surrounding the screw 52. Examples that may be employed as the second thermoregulation mechanism 80 include, for example, configuring a heat carrier through-path wrapped around the interior of the barrel 51. Although there is no particular limitation to the heat carrier fed into this heat carrier through-path, water, air, or the like may be employed therefor.

Employing the second thermoregulation mechanism 80 described above in addition to the first thermoregulation mechanism 70 results in a configuration capable of cooling or heating the resin composition P being conveyed while kneaded by the screw 52 from both faces on the inside and the outside. This means that a rise in temperature of the resin composition P caused by sheer-induced heat can be more effectively suppressed from occurring by using these thermoregulation mechanisms for cooling. In an opposite case, more uniform heating can be realized by using these thermoregulation mechanisms to heat the resin composition P.

Cooling of the resin composition P using the first thermoregulation mechanism 70, or using the first thermoregulation mechanism 70 and the second thermoregulation mechanism 80, may be operated at a freely selected timing during the period of time that the resin composition P is being conveyed such that the temperature of the resin composition P being conveyed is not greater than 100°C, preferably not greater than 70°C, and more preferably not greater than 60°C. Specific control of the thermoregulation mechanisms 70, 80 may be executed mainly by the control device 60.

Moreover, although in the motor core manufacturing device 1 according to the present embodiment an example was illustrated in which the screw 52 of the first thermoregulation mechanism 70 was manufactured through the processes illustrated in Figs. 2, manufacture may be performed by a method other than such a manufacturing method. Description follows regarding various examples of screw main bodies manufactured through different manufacturing methods to the method described above.

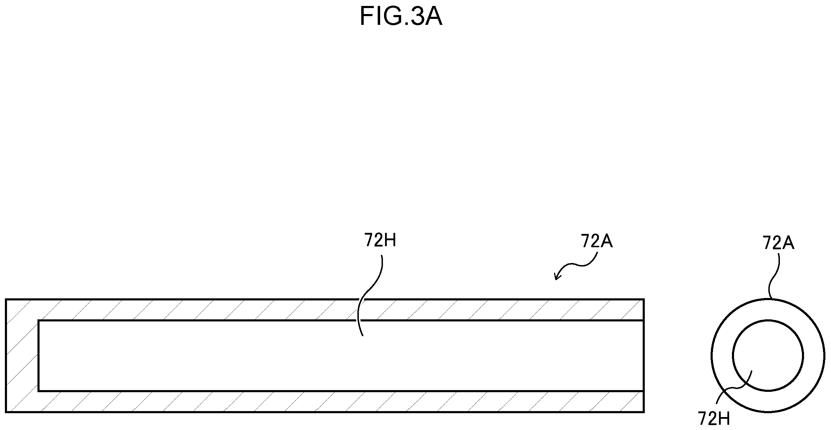

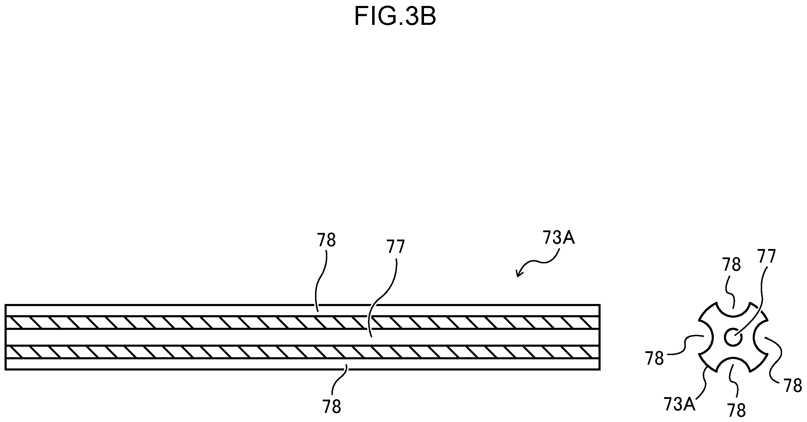

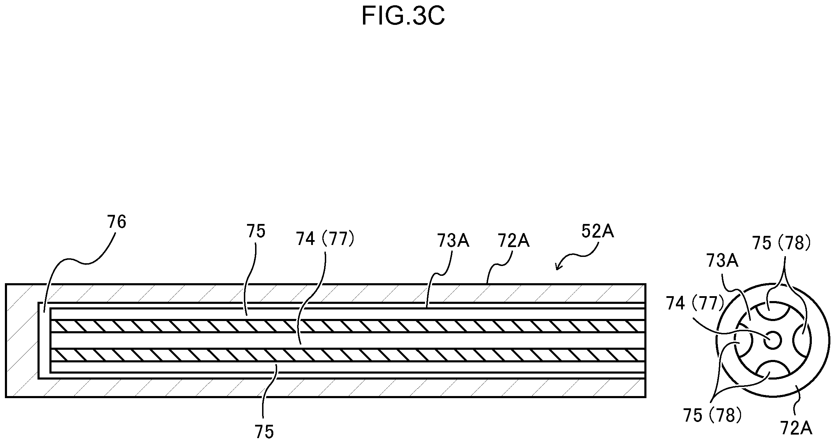

Figs. 3 are explanatory diagrams illustrating a first modified example of the screw illustrated in Fig. 2, with Fig. 3A being a cross-section and a one-side view illustrating a first screw main body, Fig. 3B a cross-section and a one-side view illustrating a first flow path forming member, and Fig. 3C a cross-section and a one-side view of a screw according to the first modified example. A screw 52A according to the first modified example may, as illustrated in Fig. 3C, include a first screw main body 72A and a first flow path forming member 73A.

The first screw main body 72A may, as illustrated in Fig. 3A, be configured by a tube-shaped member having a bottomed hole 72H formed extending along a length direction in the interior thereof by closing off a leading end of the first screw main body 72A. A fin 52F is formed to the outer periphery of the first screw main body 72A, however this is omitted from illustration in Figs. 3. In the first screw main body 72A, the bottomed hole 72H has a base end side serving as an opening connected to a motor 59, with the leading end side thereof arranged in a free end state inside the barrel 51.

The first flow path forming member 73A may, as illustrated in Fig. 3B, be configured by a tube-shaped body with a through hole 77 extending along the length direction provided in a center portion thereof. The first flow path forming member 73A configured from this tube-shaped body may include plural, for example four, indented grooves 78 formed at an outer periphery thereof and extending along the length direction. The first flow path forming member 73A preferably has an external diameter dimension adjusted so as to enable fitting inside the bottomed hole 72H of the first screw main body 72A.

Moreover, a non-illustrated rotation prevention structure, to rotate the first flow path forming member 73A together with the first screw main body 72A when fitted into the first screw main body 72A, is preferably provided to a location on the outer peripheral face of the first flow path forming member 73A where the indented grooves 78 are not formed. A known engagement profile or the like may be employed as this rotation prevention structure.

The screw 52A according to the first modified example may, as illustrated in Fig. 3C, be configured by fitting (or press-inserting) the first flow path forming member 73A inside the bottomed hole 72H of the first screw main body 72A described above. A fitted-in length of the first flow path forming member 73A when the first flow path forming member 73A has been fitted inside the bottomed hole 72H is set so as to be shorter than the depth of the bottomed hole 72H. A gap is accordingly formed between the leading end of the first flow path forming member 73A and the bottom face of the bottomed hole 72H configuring the bottom portion of the inside of the first screw main body 72A, with this gap functioning as a communication path 76.

The inflow path 74 formed in the screw 52A may be formed by the through hole 77 of the first flow path forming member 73A that has been fitted inside the bottomed hole 72H. Similarly, outflow paths 75 formed to the screw 52A may be formed by four through-paths demarcated by the inner peripheral face of the bottomed hole 72H, and the indented grooves 78 of the first flow path forming member 73A that has been fitted inside the bottomed hole 72H. A one-end of the inflow path 74 formed to this screw 52A, and one-ends of the respective outflow paths 75, may be communicated with each other through the above-described communication path 76. Manufacturing the screw 52A by assembling two members in this manner enables the machining of components to be simplified.

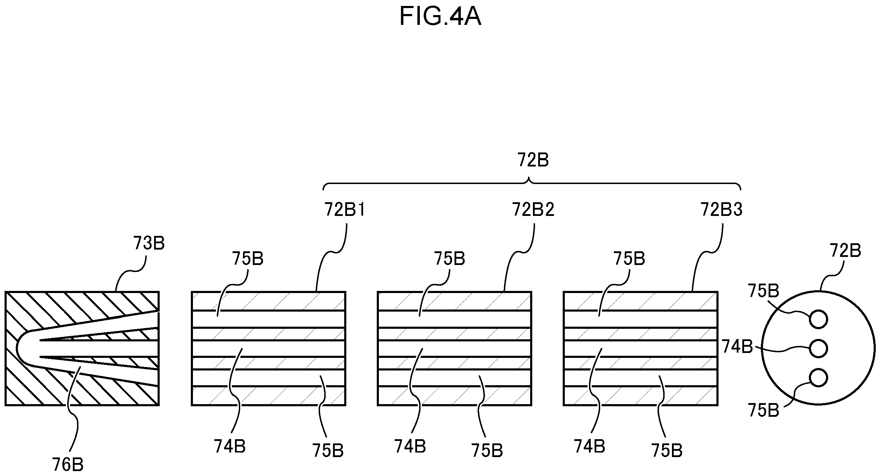

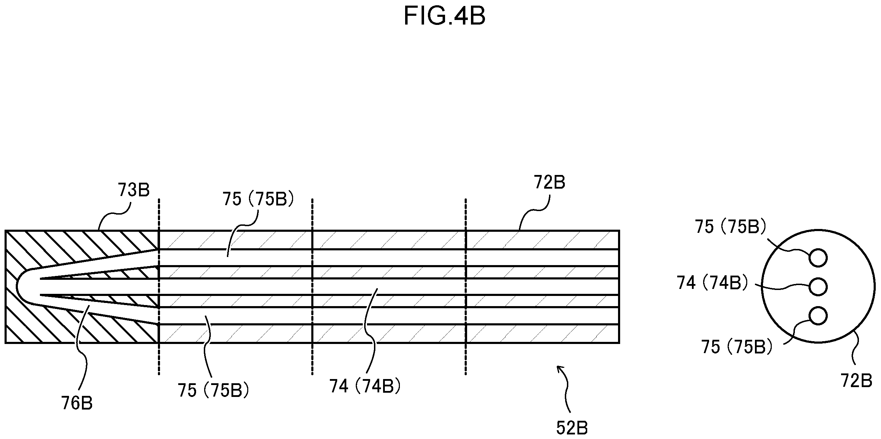

Figs. 4 are explanatory diagrams illustrating a second modified example of the screw illustrated in Fig. 2, with Fig. 4A being a cross-section and a one-side view illustrating a state prior to assembly of a second screw main body and a second flow path forming member, and

Fig. 4B being a cross-section and a one-side view illustrating a state after the second screw main body and the second flow path forming member have been assembled. A screw 52B according to the second modified example may, as illustrated in Fig. 4B, include a second screw main body 72B, and a second flow path forming member 73B.

The second screw main body 72B may, as illustrated in Fig. 4A and Fig. 4B, be configured by a pillar-shaped member including plural through holes 74B, 75B formed in an interior thereof and extending along the length direction. A fin 52F is, similarly to with the first screw main body 72A, formed at an outer periphery of the second screw main body 72B, however this is omitted from illustration in Fig. 4A and Fig. 4B. The second screw main body 72B is arranged with a base end side thereof connected to the motor 59 and with a leading end side thereof in a free end state inside the barrel 51. The through holes 74B, 75B formed in the second screw main body 72B extend along a center axis of the second screw main body 72B, and may include one through hole 74B capable of forming the inflow path 74, and plural other through holes 75B that are capable of forming the outflow paths 75, with these being arranged at a periphery of the one through hole 74B and extending substantially parallel to the one through hole 74B.

As an option, the second screw main body 72B according to the present modified example may be configured, as illustrated in Fig. 4A, by joining together plural, for example three, divided bodies 72B1 to 72B3. The divided bodies 72B1 to 72B3 can be configured by a pillar-shaped member formed with a fin 52F at the outer periphery thereof and formed with the plural through holes 74B, 75B in the interior that extend along the length direction. The second screw main body 72B may be formed by joining the divided bodies 72B1 to 72B3 together such that the plural through holes 74B, 75B of the divided bodies 72B1 to 72B3 are in respective communication with each other. In this manner, by employing a structure in which the plural divided bodies 72B1 to 72B3 are joined together to form the single second screw main body 72B, the length of the screw 52B can be changed simply by appropriate change to the number of the divided bodies being joined together as described above.

The second flow path forming member 73B may be joined to a leading end portion of the second screw main body 72B, and communicate end portions of the plural through holes 74B, 75B provided in the second screw main body 72B with each other. The second flow path forming member 73B may be configured by a pillar-shaped member having an external diameter dimension adjusted to match the second screw main body 72B. A communication path 76B may be formed to a base end portion of the second flow path forming member 73B to communicate a leading end of the single through hole 74B with the leading ends of the other two through holes 75B.

The communication path 76B can, for example, be formed by a bottomed hole extending from a base end side of the second flow path forming member 73B along a center axis of the second flow path forming member 73B, and two bottomed holes extending from a base end portion side of the second flow path forming member 73B in a direction inclined with respect to the center axis of the second flow path forming member 73B so as to communicate with a bottom portion of this bottomed hole. In the present modified example, the communication path 76B may be formed by merely drilling three bottomed holes that extend in straight lines in this manner, facilitating the machining thereof.

The screw 52B according to the second modified example may, as illustrated in Fig. 4B, be configured by joining the second screw main body 72B and the second flow path forming member 73B together in the axial direction. In the present modified example too, the screw 52B can be manufactured by joining together plural members, enabling the machining of components to be simplified. Moreover, due to the screw 52B being divided into plural configuration elements, machining to form holes in the divided bodies 72B1 to 72B3 and the second flow path forming member 73B (specifically the through holes 74B, 75B, and the bottomed holes formed in the communication path 76B) is easy.

Returning now to description of the extrusion machine 50, a standby space 51A where the screw 52 is not disposed and having a specific size may be formed between the discharge port 54 of the barrel 51 and the leading end (more specifically, the free end) of the screw 52. This standby space 51A may be a space for the paste-form resin composition P2 kneaded/conveyed by rotation of the screw 52 to be temporarily accumulated in a state temperature controlled by the first thermoregulation mechanism 70. A known non-illustrated conveyance means configured by a belt conveyor and a scraper may be provided in the standby space 51A. This conveyance means enables immediate introduction of a particular amount of the paste-form resin composition P2 that had been temporarily accumulated inside the standby space 51A into the chamber 30 by, for example, operation interlocked to opening of a shutter 56.

As an option, a barrel heater 55 is preferably arranged at an outer periphery of the standby space 51A for preheating the paste-form resin composition P2 that has been conveyed as far as the standby space 51A by the screw 52. The barrel heater 55 can be configured by a known heater, similar to the mold heater 41 and the like and, for example, may be arranged so as to surround substantially the entire periphery of the standby space 51A. The barrel heater 55 may preheat the paste-form resin composition P2 inside the standby space 51A to from 50°C to 100°C, and more preferably to from 90°C to 100°C. The paste-form resin composition P2 that has been conveyed to the standby space 51A can be raised in temperature prior to introduction into the chamber 30 due to employing this barrel heater 55, enabling softening to be promoted. A heating duration needed to soften/melt the paste-form resin composition P2 inside the chamber 30 can be greatly shortened thereby.

The present embodiment illustrates an example of a structure in which the discharge port 54 of the barrel 51 is joined to the chamber, and also the standby space 51A is provided adjacent to the discharge port 54, however the present disclosure is not limited thereto. For example, a non-illustrated conveyance mechanism may be provided between the discharge port 54 of the barrel 51 and the chamber 30, such that the paste-form resin composition P2 is introduced inside the chamber 30 by operating this conveyance mechanism. Similarly, a mechanism to remove air from the kneaded paste-form resin composition P2 may be additionally provided between the discharge port 54 of the barrel 51, and the shutter 56 or the chamber 30. This mechanism may, for example, remove air from the paste-form resin composition P2 by compressing the paste-form resin composition P2, by providing a reduced pressure chamber, or the like.

A fact that needs particular attention is that the resin composition P directly or indirectly introduced into the chamber 30 from the extrusion machine 50 of the motor core manufacturing device 1 according to the present embodiment is the paste-form resin composition P2, and is not shaped into precast tablet-form. Introducing the paste-form resin composition P2 into the chamber 30 in this manner enables an amount of the resin composition P introduced into the chamber 30 to be adjustable by controlling the rotation speed or the like of the motor 59. Note that the paste-form resin composition P2 introduced into the chamber 30 from the extrusion machine 50 may be preliminarily shaped into a specific shape. A method of this preliminarily shaping may, for example, be a method of preliminarily shaping by continuously conveying the paste-form resin composition P2 into the standby space 51A, pressing the paste-form resin composition P2 against the shutter 56 and raising the density thereof. Moreover, the operation described above to press the paste-form resin composition P2 may be implemented by temporarily moving the screw 52 itself along the conveyance direction. Alternatively, preliminarily shaping may be performed by disposing a non-illustrated tool between the extrusion machine 50 and the chamber 30, and using this tool to shape the paste-form resin composition P2 into a freely selected shape.

The motor core manufacturing device 1 according to the present embodiment enables the amount of the resin composition P introduced into the chamber 30 to be changed simply as described above, without preparing various sizes of resin tablets, thereby enabling wastage of the resin composition P to be reduced. In addition thereto, filling of the resin composition P inside the slot section 4 can be performed smoothly due to introducing the paste-form resin composition P2 that has been uniformly heated. Furthermore, due to being able to manage the temperature of the resin composition P conveyed by the screw 52 by using the first thermoregulation mechanism 70, unintentional progression of a curing reaction of the resin composition P can be prevented, consequently enabling fill defects to be suppressed from being generated.

### Motor Core Manufacturing Method

Next a simple description will be given of an example of a motor core manufacturing method according to the present embodiment. Note that in the following, the motor core manufacturing method according to the present embodiment is described for an example of a case of an implementation employing the motor core manufacturing device 1 according to the first embodiment as described above.

The motor core manufacturing method according to the present embodiment includes: a process (S4) in which the rotor core 2 is held inside the mold 20 formed with the resin composition fill path 25 so as to communicate the resin composition fill path 25 with the slot sections 4; a process (S5) in which the resin composition P of a measured resin composition fill amount is conveyed toward the chamber 30 in communication with the resin composition fill path 25 using the extrusion machine 50 capable of conveying the resin composition P while performing temperature regulation, wherein the extrusion machine 50 in the process includes the barrel 51 having the resin composition P conveyed inside, the screw 52 that is arranged inside the barrel 51 and that conveys the resin composition P while kneading, and the first thermoregulation mechanism 70 that is arranged with at least a part thereof in the interior of the screw 52; a process (S8) in which the plunger 35 that is moveable inside the chamber 30 is operated and the resin composition that has been softened inside the chamber 30 (corresponding to liquid-form resin composition P3) is filled inside the slot sections 4; and a process (S9) in which the softened resin composition filled inside the slot sections 4 is cured. A more detailed description thereof follows.

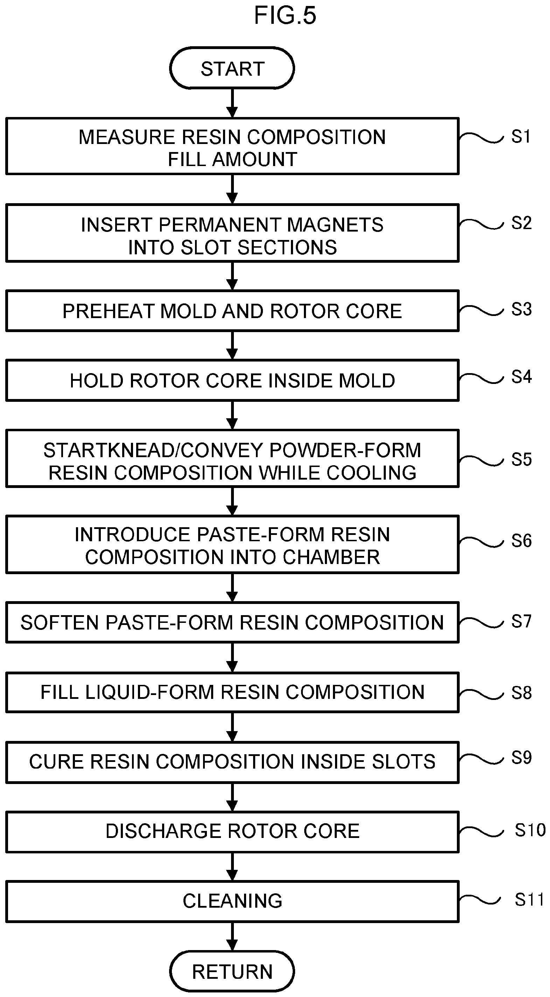

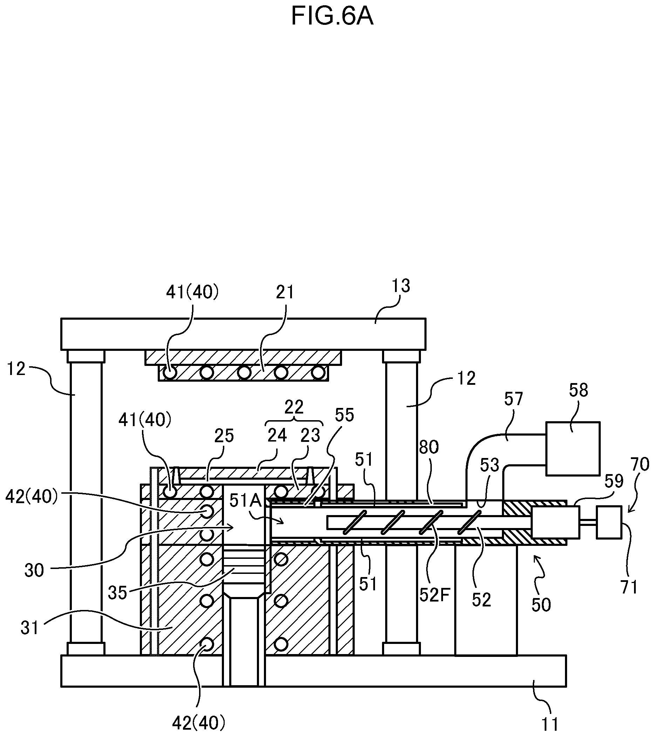

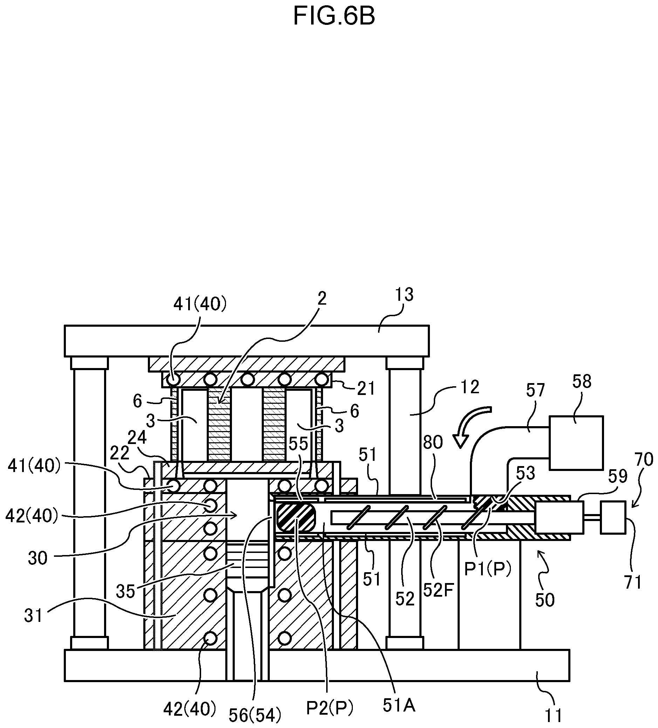

Fig. 5 is a flowchart illustrating an example of a motor core manufacturing method according to a first embodiment of the present disclosure. Moreover, Fig. 6 to Fig. 8 are operational explanatory diagrams illustrating examples of operation states of the motor core manufacturing device illustrated in Fig. 1 when the motor core manufacturing method illustrated in Fig. 5 is being executed. The following description is performed, mainly with reference to Fig. 5 to Fig. 8. Note that in order to facilitate reading the drawings, reference numerals appended in Fig. 6 to Fig. 8 focus on members related to each operation, and sometimes reference numerals are omitted from members having a low level of relationship to the operations.

In the motor core manufacturing method according to the present embodiment, after first preparing the motor core manufacturing device 1 illustrated in Fig. 6A, a fill amount of the resin composition P (resin composition fill amount) for the fill spaces 6 of the rotor core 2 is measured (process S1). Measuring this fill amount may be performed by, for example, measurement in which a volume of the slot sections 4 of the rotor core 2, and a volume of the permanent magnets 3 for inserting into the slot sections 4, are measured and a difference therebetween is calculated. The measured resin fill amount is sent to the control device 60, and an amount of the resin composition P for introduction into the chamber 30 is adjusted, specifically by utilizing control of the rotation speed or the like of the motor 59.

In the process S1 described above an example is illustrated in which the fill amount of the resin composition P is determined by measuring the volume of the slot sections 4 and the volume of the permanent magnets 3, however the fill amount may be determined by another method. Specifically, for example, trial processes may be executed prior to starting mass production, and the fill amount determined from fill amounts of the resin, the amount of excess resin, and the like in the trial processes. Alternatively, the resin fill amount, excess resin, and the like may be checked during actual mass production at a frequency not detrimental to mass production, so as to maintain a preferable fill amount by performing feedback control of the fill amount. Moreover, the various methods of determining the fill amount described above may be executed singly or as a combination thereof.

When measurement of the required fill amount of the resin composition P has been completed, next the permanent magnets 3 are inserted inside the slot sections 4 of the rotor core 2 (process S2). Preheating of the mold 20 and the rotor core 2 is then performed (process S3). The preheating of the mold 20 may be implemented by operating the mold heater 41. When doing so, preheating of the chamber 30 is preferably performed together with the mold 20. The preheating of the chamber 30 may be implemented by operating the chamber heater 42. Moreover, the preheating of the rotor core 2 can be performed by employing a non-illustrated known heating means. The preheating of the rotor core 2 may be performed separately to the mold 20 prior to placement on the stage 24, or may be performed at the same time as the preheating of the mold 20 in a state placed on the stage 24. When preheating the mold 20 and the rotor core 2 at the same time, process S4, described later, is preferably executed prior to process S3. The preheating temperature of the mold 20 and the rotor core 2 may be about from 100°C to 180°C. Note that this preheating may be performed on just one from out of the mold 20 or the rotor core 2.

When preheating of the mold 20 and the rotor core 2 has been completed, as illustrated in Fig. 6B, the rotor core 2 is placed on the stage 24, and the rotor core 2 is held inside the mold 20 by moving the upper die 21 downward (process S4). When doing so, the upper die 21 is adjusted so as to press the upper surface of the rotor core 2 with a specific pressure, thereby enabling the upper die 21 and the upper surface of the rotor core 2, and the lower die 22 and the lower surface of the rotor core 2, to be respectively placed in close contact with each other. Note that part of the measurement of the fill amount of the resin composition P for the fill spaces 6 of the rotor core 2 may be executed when the rotor core 2 is being held. Specifically, a height of the slot sections 4 in the height direction may be identified from a control signal of a non-illustrated actuator employed when moving the upper die 21 in the height direction, and this utilized to measure the fill amount. In such cases the process S1 described above is preferably executed after the process S4.

Next, the kneading and conveying of the powder-form resin composition P1 is performed using the extrusion machine 50 (process S5). In this process, first the powder-form resin composition P1 is fed (for example continuously) from the resin composition feed source 58 to the feed port 53 of the barrel 51 and, by driving the motor 59 and rotating the screw 52, the powder-form resin composition P1 that has been fed to the feed port 53 is conveyed to the discharge port 54 while being kneaded. When doing so, in the motor core manufacturing device 1 according to the present embodiment, the first thermoregulation mechanism 70 and the second thermoregulation mechanism 80 are operated either prior to rotating the screw 52, or at the same time as rotating the screw 52, and temperature regulation of the resin composition P being conveyed, for example cooling, is performed. Due to performing this cooling operation, a rise in temperature arising in the resin composition P caused by kneading/conveying by the screw 52 can be controlled, consequently enabling unintentional progression of a curing reaction in the resin composition P to be suppressed.

In the process S5, control may be performed so as to convey the powder-form resin composition P1 in an amount that matches the fill amount of the resin composition P measured at process S1 to the standby space 51A while being changed into the paste-form resin composition P2 (see Fig. 6B) by controlling the rotation speed of the motor 59 using the control device 60. However, the amount referred to here that matches the fill amount of the resin composition P indicates not only the volume of the fill spaces 6, and is a capacity of the resin composition fill path 25, and an amount of the resin composition P required to fill the fill spaces 6, and the like. Note that adjustment of the amount of the paste-form resin composition P2 to be introduced into the chamber 30 is not limited to a method based on the rotation speed of the motor 59 as described above. For example, the amount of the paste-form resin composition P2 for introducing into the chamber 30 may be adjusted by adjusting the amount of the powder-form resin composition P1 to feed from the resin composition feed source 58 so as to align with the fill amount of the resin composition measured at process S1. Moreover, the amount of the paste-form resin composition P2 that has accumulated in the standby space 51A may be measured by providing a non-illustrated sensor, for example a weight sensor, to the standby space 51A, and the amount of the paste-form resin composition P2 for introducing into the chamber 30 may be adjusted by comparison to a pre-measured resin composition fill amount.

Moreover, the resin composition P that has been kneaded and conveyed at process S5 is conveyed to the standby space 51A in a state of the paste-form resin composition P2, or in a mixed state of the powder-form resin composition P1 and the paste-form resin composition P2. When this is performed, the barrel heater 55 may be driven, and preheating performed on the resin composition P being conveyed in the standby space 51A. The preheating temperature by the barrel heater 55 may be adjusted to a range of, for example, from 50°C to 100°C. The powder-form resin composition P1 that has been fed from the feed port 53 by the kneading and conveying described above is substantially transformed into the paste-form resin composition P2 while in the standby space 51A.

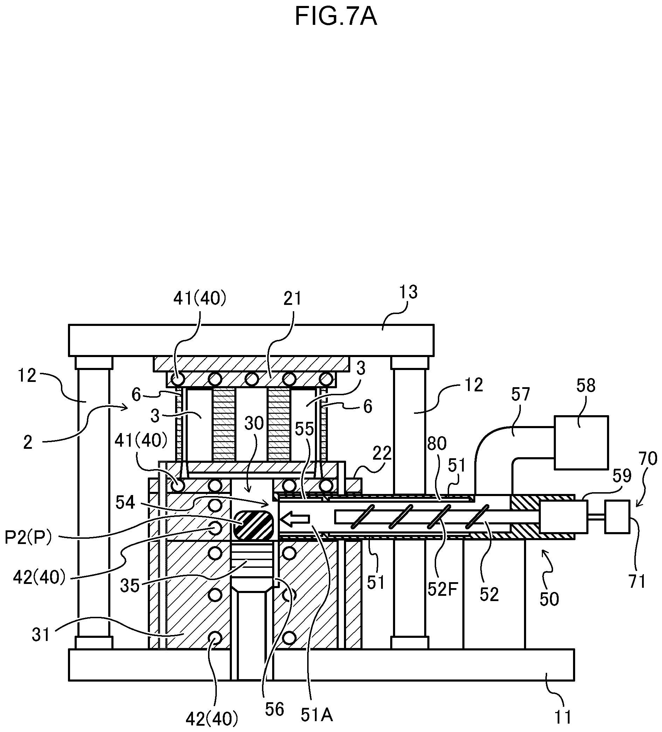

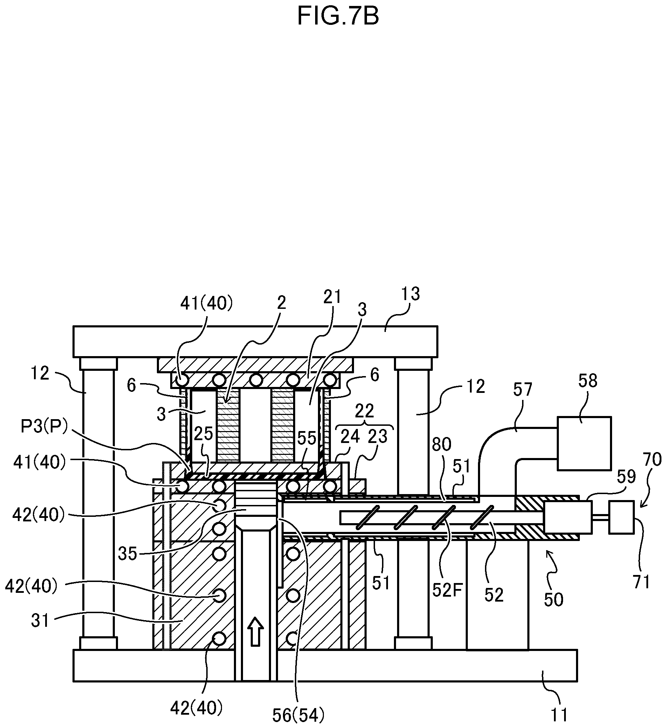

When a specific amount of the resin composition P has been conveyed to the standby space 51A, as illustrated in Fig. 7A, the shutter 56 is opened, and the paste-form resin composition P2 that has temporarily accumulated in the standby space 51A is introduced into the chamber 30 using a non-illustrated conveyance means (process S6). The paste-form resin composition P2 that has temporarily accumulated in the standby space 51A is adjusted to an amount matching the fill amount of the resin composition measured as described above. In addition, the paste-form resin composition P2 that has temporarily accumulated in the standby space 51A is preheated by heating with the barrel heater 55 to from 50°C to 100°C. The paste-form resin composition P2 has been transformed into a paste form by the above preheating or the like, and introduction into the chamber 30 can be executed without hinderance even though it might have become integrated together overall in a lump-form.

When the paste-form resin composition P2 has been introduced into the chamber 30, next the shutter 56 is closed, the chamber heater 42 is operated, and the paste-form resin composition P2 is heated and softened (process S7). The chamber heater 42 may, for example, be controlled so as to heat the paste-form resin composition P2 inside the chamber 30 to about from 100°C to 180°C. The paste-form resin composition P2 is softened and melted by this heating, and is transformed into the liquid-form resin composition P3 having high fluidity. In the motor core manufacturing processes according to the present embodiment, the paste-form resin composition P2 has already been preheated to from 50°C to 100°C as described above, and so the time needed for softening inside the chamber 30 can be shortened compared to hitherto.

When the paste-form resin composition P2 has been transformed into the liquid-form resin composition P3 by the process S7, next the plunger 35 is raised, as illustrated in Fig. 6B, the liquid-form resin composition P3 is pushed up toward the fill spaces 6 of the rotor core 2, and filling of the resin composition P is performed (process S8). The liquid-form resin composition P3 pushed up by the plunger 35 passes from the chamber 30 through the resin composition fill path 25 and inflows into the fill spaces 6. Note that in order to execute filling of the liquid-form resin composition P3 into the fill spaces 6 smoothly at process S8, for example, air holes (omitted from illustration) may be provided at appropriate places on the upper die 21 to remove air inside the fill spaces 6.

When filling of the liquid-form resin composition P3 into the fill spaces 6 is complete, the mold heater 41 is operated, and the liquid-form resin composition P3 inside the fill spaces 6 is heated/cured (process S9). When curing the liquid-form resin composition P3, heating is preferably performed, for example, for about several minutes at from 100°C to 180°C. The liquid-form resin composition P3 is transformed by this heating into a cured resin composition P4, and the permanent magnets 3 are fixed by resin molding inside the slot sections 4 of the rotor core 2. Note that duration of heating at process S9 may be adjusted as appropriate to in accordance with the specific composition and the like of the resin composition P.

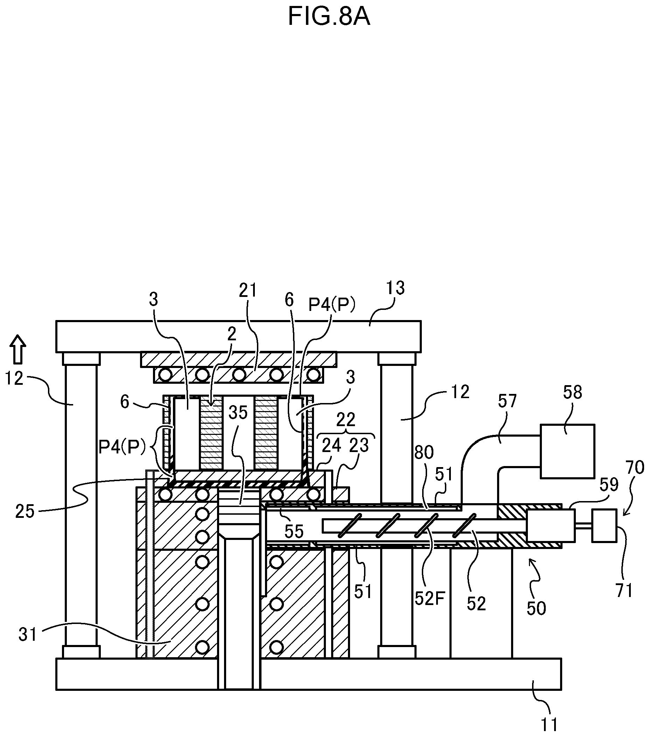

When the above cycle of resin molding processes has been completed, as illustrated in Fig. 8A, the upper die 21 is raised, the rotor core 2 that has been resin molded is then discharged using a non-illustrated conveyance means, such as a robot arm or the like (process S10). The discharged rotor core 2 is then, for example, moved to a separate device for attaching a shaft or the like. When discharge of the rotor core 2 has been completed, cleaning of the manufacturing device 1 is performed (process S11). The cleaning of the manufacturing device 1 may be executed by a non-illustrated cleaning unit including a cleaning member such as a brush or the like.

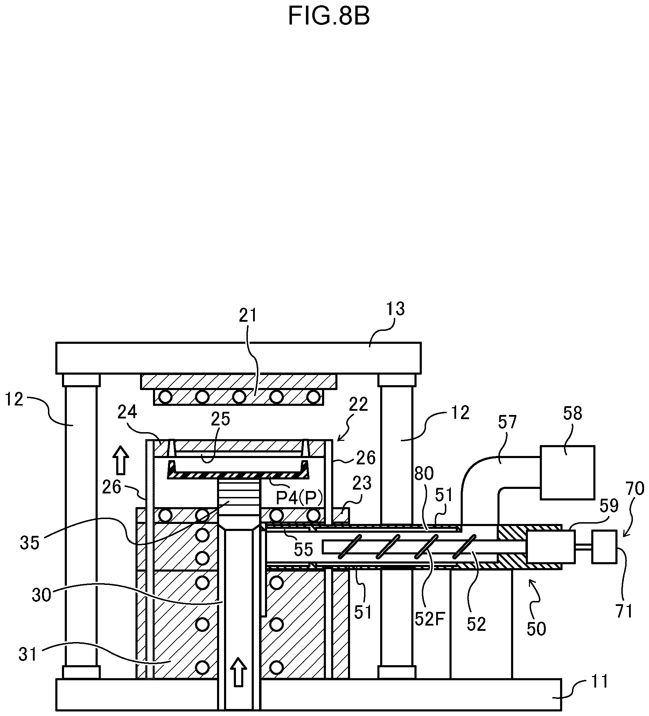

When performing such cleaning, the following operations may be performed when cleaning the resin composition fill path 25 of the stage 24. Namely, the cured resin composition P4 blocking the resin composition fill path 25 is first removed from the resin composition fill path 25 by operating the lifter 26 and separating the stage 24 from the lower die main body 23. The cured resin composition P4 is also separated from the lower die main body 23 by further raising the plunger 35 (see Fig. 8B). The separated cured resin composition P4 is gripped by a non-illustrated robot arm or the like and removed, surfaces of the stage 24 and the lower die main body 23, and the inside of the resin composition fill path 25, are then cleaned by a brush or the like. A return is made to the state illustrated in Fig. 6A when a cycle of cleaning has been completed, and a standby state is adopted until the next rotor core 2 is loaded.

Note that the sequence in the cycle of processes described above may be changed within a range enabling functions thereof to be maintained. For example, conveyance of the powder-form resin composition P1 or of the paste-form resin composition P2 by the extrusion machine 50 can be started at a freely selected timing after the fill amount of the resin composition P has been measured. Moreover, the preheating of the mold 20, the rotor core 2, the resin composition P, and the like may be omitted.

As described above, the motor core manufacturing method according to the present embodiment enables wastage of the resin composition P to be suppressed due to not employing precast tablet-form as the resin composition P introduced into the chamber 30, and to being able to use the extrusion machine 50 to predictably introduce the required amount of the resin composition P into the chamber 30. There is accordingly no longer a need to select a resin tablet in accordance with fill amounts of resin for respective motor cores.

The present disclosure is not limited to the embodiments described above, and various modifications may be implemented within a range not departing from the spirit of the present disclosure. All of such modifications are encompassed in the technical idea of the present disclosure. Moreover, each of the configuration elements in the present disclosure may be present singularly or present as two or more unless this gives rise to inconsistencies.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the disclosure (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. No language in the specification should be construed as indicating any non-claimed element as essential to the practice of the disclosure.

Preferred embodiments of this disclosure are described herein, including the best mode known to the inventors for carrying out the disclosure. Variations of those preferred embodiments may become apparent to those of ordinary skill in the art upon reading the foregoing description. The inventors expect skilled artisans to employ such variations as appropriate, and the inventors intend for the disclosure to be practiced otherwise than as specifically described herein. Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein or otherwise clearly contradicted by context.

## Claims

1. A motor core manufacturing device, comprising:
a mold that holds a motor core including a resin fill section;
a chamber that is formed at the mold and that includes a one-end portion communicating with a resin composition fill path in communication with the resin fill section;
a plunger that conveys a resin composition with thermoset properties which has been conveyed to the chamber toward the resin composition fill path;
a heating apparatus that is arranged inside the mold, or that is arranged inside the mold and at a periphery of the chamber; and
an extrusion machine that conveys the resin composition to the chamber while kneading so as to introduce the resin composition into the chamber, wherein the extrusion machine includes:
an extrusion conveyance path to convey the resin composition therein,
a screw that is arranged inside the extrusion conveyance path, and that conveys the resin composition while kneading, and
a first thermoregulation mechanism that is arranged at least in part of an interior of the screw.

2. The motor core manufacturing device of claim 1, wherein the extrusion machine further includes a second thermoregulation mechanism that is arranged at the extrusion conveyance path so as to surround part of the screw.

3. The motor core manufacturing device of claim 1, wherein the first thermoregulation mechanism includes:
an inflow path equipped with a heat carrier feed port at a one-end and extending from a base end side of the screw along a center axis of the screw; and
an outflow path having a one-end in communication with an other-end of the inflow path and extending toward the base end side of the screw.

4. The motor core manufacturing device of claim 3, wherein a heat carrier employed in the first thermoregulation mechanism is a gas.

5. The motor core manufacturing device of any one of claim 1 to claim 4, wherein:
the screw includes:
a tube-shaped first screw main body that has a fin, to convey the resin composition, formed at an outer periphery and that has a closed off leading end, and
a first flow path forming member that is configured by a tube-shaped body provided with a through hole at a center portion thereof extending along a length direction, and that is also formed with a plurality of indented grooves disposed at an outer periphery thereof extending along the length direction; and
the first flow path forming member is fitted inside the first screw main body such that a gap is formed between a leading end thereof and a bottom portion inside the first screw main body.

6. The motor core manufacturing device of any one of claim 1 to claim 4, wherein the screw includes:
a second screw main body that has a fin, to convey the resin composition, formed at an outer periphery and that has a plurality of through holes formed in an interior and extending along a length direction; and
a second flow path forming member that is joined to a leading end portion of the second screw main body and that communicates end portions of the plurality of through holes with each other.

7. The motor core manufacturing device of claim 6, wherein:
the second screw main body is formed by joining together a plurality of individual divided bodies each formed with the fin at the outer periphery and formed with a plurality of through holes in an interior extending along the length direction, so as to communicate the plurality of through holes with each other.

8. A motor core manufacturing method, comprising:
a step of holding a motor core in a mold formed with a resin composition fill path so as to communicate the resin composition fill path with a resin fill section of the motor core;
a step of conveying a resin composition toward a chamber that communicates with the resin composition fill path while performing temperature regulation using an extrusion machine capable of conveying the resin composition, wherein the extrusion machine includes an extrusion conveyance path having the resin composition conveyed inside, a screw that is arranged inside the extrusion conveyance path and that conveys the resin composition while kneading, and a first thermoregulation mechanism having at least a part arranged in an interior of the screw;
a step of operating a plunger that is moveable inside the chamber and filling the resin composition that has been softened inside the chamber inside the resin fill section; and
a step of curing the softened resin composition filled inside the resin fill section.
